# EUROPÄISCHE PATENTANMELDUNG

(11) **EP 0 760 470 A2**
(43) Veröffentlichungstag der Anmeldung: **05.03.1997**
(21) Anmeldenummer: 96113644.7
(22) Anmeldetag: 26.08.1996
(51) Int. Cl.: G01L 19/14

(54) **Manometer**

(30) Priorität: 29.08.1995 CH 2454/95
(71) Anmelder: Mock, Bruno Armin, CH-6052 Hergiswil NW (CH)
(72) Erfinder: Mock, Bruno Armin, CH-6052 Hergiswil NW (CH)
(74) Vertreter: Petschner, Goetz

(57) **Zusammenfassung**

Das Manometer ist gekennzeichnet durch mindenstens eine, auswechselbar von aussen sichtglasseitig auf das Manometergehäuse (1) aufdrückbare transparente Scheibe (5) mit wenigstens einer, einer Druck-Skala (8) auf dem Manometer-Ziffernblatt (3) durch Nullpunkt-Ausrichtung zuordenbaren Temperatur-Skala (7) eines vorgegebenen Kältemittels.

Einer solchen Manometer-Anordnung für Anlagen zum Umfüllen gasförmiger und/oder flüssiggasförmiger Druckmedien kann nun eine Mehrzahl solcher Scheiben entsprechend der Anzahl der hier verwendeten Kühlmittel zugeordnet werden, welche betreffende Scheibe der Anwender auf das Manometer aufdrückt, um dann die Null-Lage einzustellen, wonach die Ablesung in üblicher Weise erfolgen kann.

## Beschreibung

Die vorliegende Erfindung betrifft einen Manometer.

In vielen Bereichen der Technik, beispielsweise in der Kühltechnik, ist es notwendig, unter Druck stehende Medien, wie Kühlmittel, zu überwachen, wofür das Manometer ein übliches Messinstrument ist.

Im Bereich der Kühltechnik, etwa für das Umfüllen von Kühlmittel in Kühlschränke oder insbesondere in Automobil-Klimaanlagen, dienen Kontrollarmaturen, die mit Manometern ausgerüstet sind, um den nicht ungefährlichen Umfüllvorgang genaustens überwachen zu können, wofür das Manometer neben einer Druck-Skala, etwa von -1 bis +10 bar, wenigstens eine Temperatur-Skala, etwa von -60° bis + 30°, aufweist, wobei die Temperatur des unter Druck stehenden Kühlmittels in einem vorgegebenen Verhältnis zum Druck steht und Temperatur- und Druck-Skala eine entsprechende Aufteilung zueinander aufweisen.

Um Temperatur und Druck solcher Medien genaustens überwachen zu können, sind optische Klarheit und Erfassbarkeit der Skalen des Manometers durch den Anwender erste Voraussetzung.

Diese Voraussetzungen sind dann gegeben, wenn das Manometer neben der Druck-Skala bestenfalls noch zwei Skalen für die unterschiedlich druckabhängigen Temperaturen zweier verschiedener Kühlmedien, beispielsweise Isobutan R-600-a und FKW R-134-a, aufweist.

Hingegen ist die heutige, aus Umweltgründen entstandene Vielzahl von unterschiedlichen Kühlmitteln mit dieser üblichen Skalen-Technik nicht mehr bewältigbar. Entweder man verwendet für jedes Kühlmittel ein anderes Manometer, was natürlich unsinnig ist, oder man verwendet eine universelle Temperatur-Einheits-Skala mit zur Druck-Skala vorgegebenem Umrechnungsfaktor für jedes bekannte Kühlmittel und entnimmt einem Tabellen-Buch die betreffenden Werte. Auch das ist für den Anwender höchst umständlich, insbesondere wenn man berücksichtigt, dass heute bereits gegen 30 verschiedene Kältemittel auf dem Markt sind bei steigender Tendenz.

Es ist deshalb Aufgabe der vorliegenden Erfindung, ein Manometer der vorgenannten Art zu schaffen, dass ein direktes und skalenmässiges Ablesen der druckabhängigen Temperatur für jedes bekannte Kühlmittel erlaubt.

Dies wird erfindungsgemäss erreicht durch mindenstens eine, auswechselbar von aussen sichtglasseitig auf das Manometergehäuse aufdrückbare transparente Scheibe mit wenigstens einer, einer Druck-Skala auf dem Manometer-Ziffernblatt durch Nullpunkt-Ausrichtung zuordenbaren Temperatur-Skala eines vorgegebenen Kältemittels.

Durch diese Massnahmen kann nun einer Manometer-Anordnung, wie einer sogenannten Monteurhilfe oder Kontrollarmatur für Anlagen zum Umfüllen gasförmiger und/oder flüssiggasförmiger Druckmedien, eine Mehrzahl solcher Scheiben entsprechend der Anzahl der hier verwendeten Kühlmittel zugeordnet werden, welche betreffende Scheibe der Anwender dann vorteilhaft einer Schachtel mit bezeichneten Fächern entnimmt und auf das Manometer aufdrückt, um dann die Null-Lage einzustellen, wonach die Ablesung in üblicher Weise erfolgen kann. Dies ist absolut einfach und fehlerfrei zu handhaben.

Eine bevorzugte Ausgestaltung ist hier dadurch gegeben, dass die Scheibe randnahe, nach hinter abragende Klemm-Mittel aufweist, welche in Umfangsrichtung von einander distanzierte, das Manometergehäuse umfänglich ganz oder teilweise umgreifende, gegebenenfalls hintergreifende Flanschmittel sein können.

Eine beispielsweise Ausführungsform des Erfindungsgegenstandes ist nachfolgend anhand der Zeichnung näher erläutert. Es zeigen:
- Fig. 1: ein erfindungsgemässes Manometer in schematischer, schaubildartiger Explosivdarstellung und
- Fig. 2: einen Schnitt entlang der Schnittlinie II - II in Fig. 1.

Das ansich bekannte Manometer mit Gehäuse 1, Anschlussnippel 2, innenliegendem Ziffernblatt 3 und Zeiger 4 zeichnet sich aus durch eine, auswechselbar von aussen sichtglasseitig auf das Manometergehäuse 1 aufdrückbare transparente Scheibe 5 mit wenigstens einer, einer Druck-Skala 8 auf dem Manometer-Ziffernblatt 3 durch Nullpunkt-Ausrichtung zuordenbaren Temperatur-Skala 7 eines vorgegebenen Kältemittels.

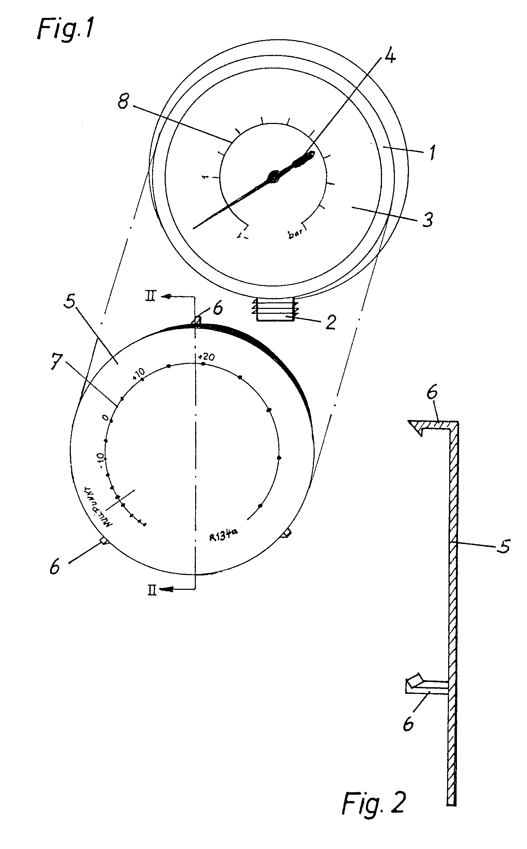

Die Scheibe 5 besteht vorzugsweise aus einem transparenten Kunststoff und weist randnahe, nach hinter abragende Klemm-Mittel auf, welche gemäss Fig. 2 in Umfangsrichtung von einander distanzierte, das Manometergehäuse 1 umfänglich teilweise umgreifende und gering hintergreifende Flanschmittel 6 sind.

Die Scheibe 5 kann aber auch dosenförmig ausgebildet sein, wobei dann die Umfangswandung das Manometergehäuse umgreifen kann.

Die Scheibe mit der Druck-Skala lässt sich ohne weiteres auf das Manometer-Gehäuse aufdrücken und in Nullpunkt-Ausrichtung verdrehen, wobei zweckmässig ein genügender Haftungsdruck zwischen Scheibe und Gehäuse besteht, um ein unabsichtliches Verdrehen oder Abstreifen sicher zu verhindern.

Es wird Schutz beansprucht wie folgt:

## Patentansprüche

1. Manometer, gekennzeichnet durch mindenstens eine, auswechselbar von aussen sichtglasseitig auf das Manometergehäuse (1) aufdrückbare transparente Scheibe (5) mit wenigstens einer, einer Druck-Skala (8) auf dem Manometer-Ziffernblatt (3) durch Nullpunkt-Ausrichtung zuordenbaren Temperatur-Skala (7) eines vorgegebenen Kältemittels.

2. Manometer, nach Anspruch 1, dadurch gekennzeichnet, dass die Scheibe (5) randnahe, nach hinter abragende Klemm-Mittel (6) aufweist.

3. Manometer, nach Anspruch 2, dadurch gekennzeichnet, dass die Klemm-Mittel (6) in Umfangsrichtung von einander distanzierte, das Manometer gehäuse umfänglich ganz oder teilweise umgreifende, gegebenenfalls hintergreifende Flanschmittel sind.
